# EUROPÄISCHE PATENTANMELDUNG

(11) **EP 1 043 007 A2**
(43) Veröffentlichungstag der Anmeldung: **11.10.2000**
(21) Anmeldenummer: 00106917.8
(22) Anmeldetag: 31.03.2000
(51) Int. Cl.: A61G 5/06

(54) **Treppensteigvorrichtung, beispielsweise für Rollstühle**

(30) Priorität: 07.04.1999 DE 19915482
(71) Anmelder: Gobbers, Walter und Dieter, Lehigh Acres, FL 33970 (US)
(72) Erfinder: Gobbers, Walter, Lehigh Acres,FL 33970 (US)
(74) Vertreter: Dr. Weitzel & Partner

(57) **Zusammenfassung**

Die Erfindung betrifft ein Fahrwerk für eine Last, beispielsweise Treppensteigeinrichtung für einen Rollstuhl.

Die Erfindung ist gekennzeichnet durch die folgenden Merkmale:
- es sind zwei Raupeneinheiten vorgesehen;
- jede Raupeneinheit umfaßt eine Raupe, die zu einer endlosen Schlaufe gebildet ist;
- jede Schlaufe umschlingt eine die betreffende Raupe führende, langgestreckte Führungseinrichtung;
- jede Führungseinrichtung ist jeweils der Länge nach wenigstens in zwei Teile unterteilt, die relativ zueinander um eine auf der Fahrspur senkrechte Schwenkachse verschwenkbar sind.

## Beschreibung

Die Erfindung betrifft eine Treppensteigvorrichtung, insbesondere zum Fördern von Rollstühlen.

DE 37 13 564 beschreibt eine solche Vorrichtung. Diese umfaßt ein Fahrgestell, an welchem zu beiden Seiten in gegenseitigem Abstand jeweils ein Laufrad-Paar angeordnet ist. Beide Laufräder sind gegenüber dem Fahrgestell um eine Welle verschwenkbar und führen im Betrieb ein Art Gehbewegung aus. Solche Vorrichtungen haben den Nachteil, daß beim Aufsetzen der Laufräder auf eine Stufe jeweils ein Stoß auftritt, der für den Rollstuhlbenutzer schmerzhaft sein kann. Vorrichtungen dieser Art sind außerdem kompliziert im Aufbau und daher teuer in der Herstellung.

Es sind auch Vorrichtungen bekannt, die ein Fahrwerk nach Art eines Raupenfahrzeuges umfassen. Das Fahrwerk weist dabei zwei Raupeneinheiten auf. Jede Raupeneinheit umfaßt eine Raupe von der Gestalt einer endlosen Schlaufe. Jede Schlaufe umschlingt eine Anzahl von Rädern, von denen wenigstens eines angetrieben ist.

Vorrichtungen dieser Art haben den Nachteil, daß sie nur für Geradeausfahrt geeignet sind, so daß sie beispielsweise nicht auf Treppen mit gekrümmtem Verlauf eingesetzt werden können.

Der Erfindung liegt die Aufgabe zugrunde, ein Fahrwerk zu schaffen, beispielsweise eine Treppensteigeinrichtung für einen Rollstuhl, das nach dem Raupenprinzip aufgebaut ist, und das auch kurvengängig ist.

Diese Aufgabe wird durch die Merkmale von Anspruch 1 gelöst.

Die Erfindung ist anhand der Zeichnungen näher erläutert. Darin ist im einzelnen folgend es dargestellt:
- Figur 1: zeigt ein erfindungsgemäßes Fahrwerk 1, das einen Rollstuhl 2 trägt.
- Figur 2: zeigt das Fahrwerk ohne Rollstuhl.
- Figur 3: zeigt in einer Seitenansicht und in schematischer Dartstelllung Raupeneinheiten des Fahrwerks.
- Figur 4: ist eine perspektivische Ansicht einer Raupeneinheit.
- Figur 5: zeigt den Gegenstand von Figur 4, wiederum in perspektivischer Ansicht, teilweise geschnitten.
- Figur 6: zeigt den Gegenstand von Figur 4 in Kurvenfahrt.
- Figur 7: zeigt den Gegenstand von Figur 6 teilweise geschnitten.
- Figur 8: zeigt Glieder der Führungseinrichtung in Explosionsansicht.
- Figur 9: zeigt zwei Glieder in vergrößerter Darstellung.
- Figur 10: zeigt Einzelheiten von zwei Gliedern bei Geradeausfahrt.
- Figur 11: zeigt den Gegenstand von Figur 10 bei Kurvenfahrt.
- Figur 12: zeigt eine Einzelheit eines Gliedes.
- Figur 13: zeigt das obere und das untere Trumm einer Raupe.
- Figur 14: zeigt in Draufsicht die Kette einer Raupe bei Geradeausfahrt.
- Figur 15: zeigt in Draufsicht die Kette einer Raupe bei Kurvenfahrt.
- Figur 16: ein Glied eines Außengurtes einer Raupe.
- Figur 17: zeigt ein anderes Glied eines Außengurtes einer Raupe
- Figur 18: zeigt in einem Schnitt senkrecht zur Fahrtrasse und schematisch ein Führungsglied mit den beiden Trummen einer Raupe.
- Figur 19: zeigt in perspektivischer Darstellung den Hauptteil des Fahrwerkes 1 mit Lenkeinrichtung bei Geradeausfahrt.
- Figur 20: zeigt den Gegenstand von Figur 19 bei Kurvenfahrt.

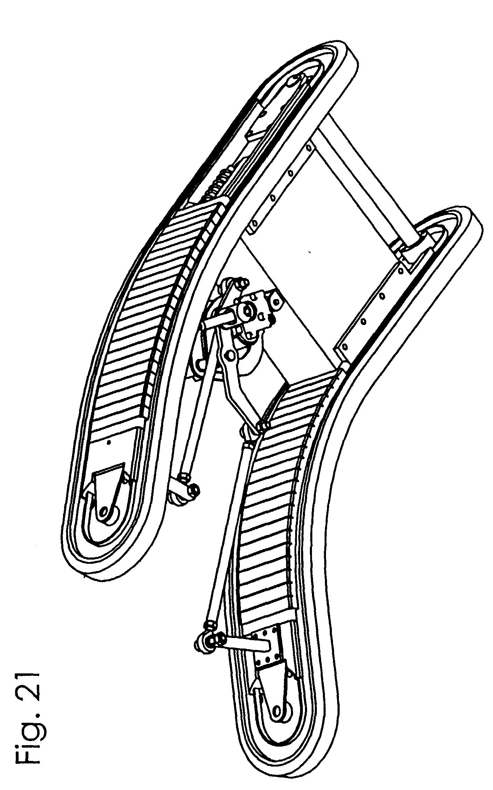

- Figur 21: zeigt den Gegenstand von Figur 20 in einer Ansicht von unten.
- Figur 22: zeigt eine Einzelheit der Lenkeinrichtung.
- Figur 23: zeigt einen vergrößerten Ausschnitt aus dem Gegenstand von Figur 22.
- Figur 24: zeigt in Seitenansicht den Endbereich einer Raupeneinheit bei Kurvenfahrt.
- Figur 25: zeigt den Gegenstand von Figur 24 bei Geradeausfahrt.
- Figur 26: zeigt einen Steuerkasten mit Bedienungsknopf.

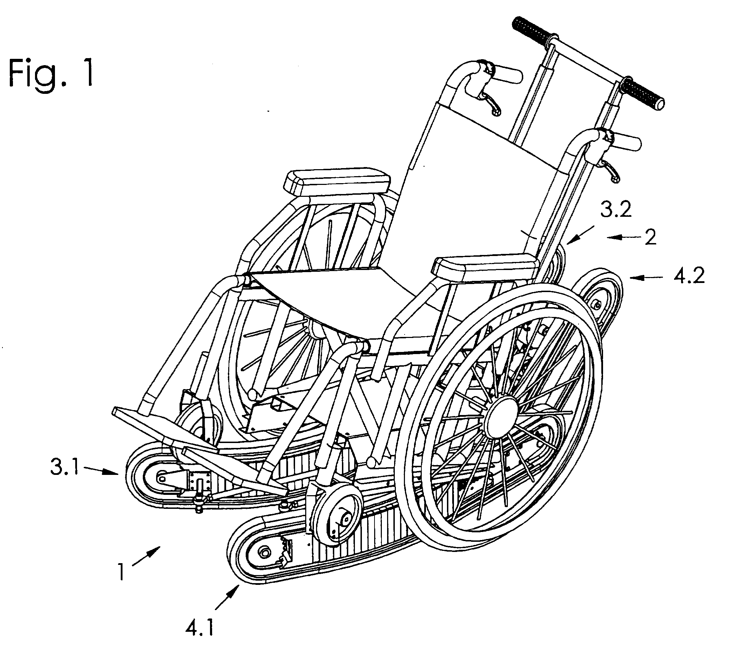

In Figur 1 ist der Rollstuhl 2 auf das Fahrwerk 1 aufgebockt und mit diesem mechanisch verriegelt, sodaß die beiden eine feste Einheit bilden. Man erkennt zwei Raupeneinheiten 3.1, 4.1 sowie 3.2, 4.2 des Fahrwerkes 1.

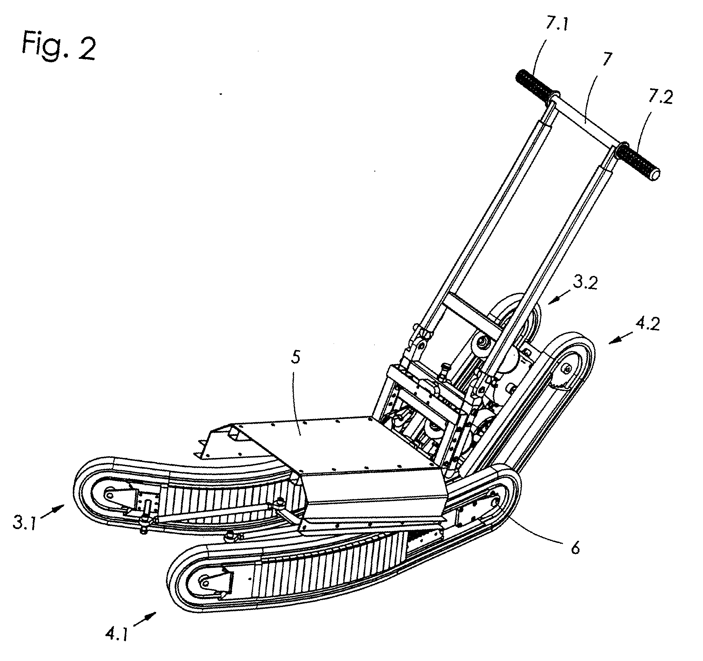

Nach Abnahme des Rollstuhles 2 in Figur 2 liegt eine Montageplatte 5 frei. Man erkennt nunmehr auch besser die beiden Raupeneinheiten-Paare, nämlich 3.1, 4.1 und 3.2, 4.2. Wie man sieht, befinden sich die beiden hinteren Raupeneinheiten 3.2, 4.2 - in Draufsicht gesehen - zwischen den beiden vorderen Raupeneinheiten 3.1, 4.1. Sie sind mittels einer Achse 6 aneinander angelenkt. Wie man ferner erkennt, liegen die beiden Paare in zwei Ebenen, die einen Winkel miteinander bilden. Dieser Winkel kann verstellbar sein, je nach Steigung der zu bewältigenden Trasse, beispielsweise Treppe.

Am Fahrwerk greift eine Deichsel 7 mit zwei Handgriffen 7.1, 7.2 an. Eine Bedienungsperson kann damit das Fahrwerk und damit auch die darauf befindliche Last, im vorliegenden Falle den Rollstuhl 2, manipulieren.

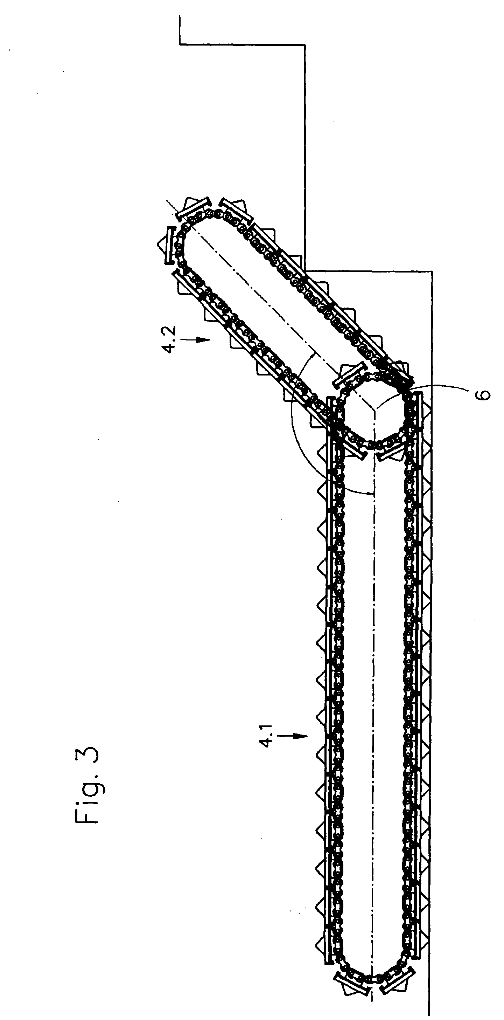

Die schematische Darstellung von Figur 3 läßt sehr gut den Winkel erkennen, die die beiden Raupeneinheiten-Paare, 3.1, 4.1 und 3.2, 4.2, miteinander bilden. Dieser Winkel beträgt im vorliegenden Falle etwa 120°.

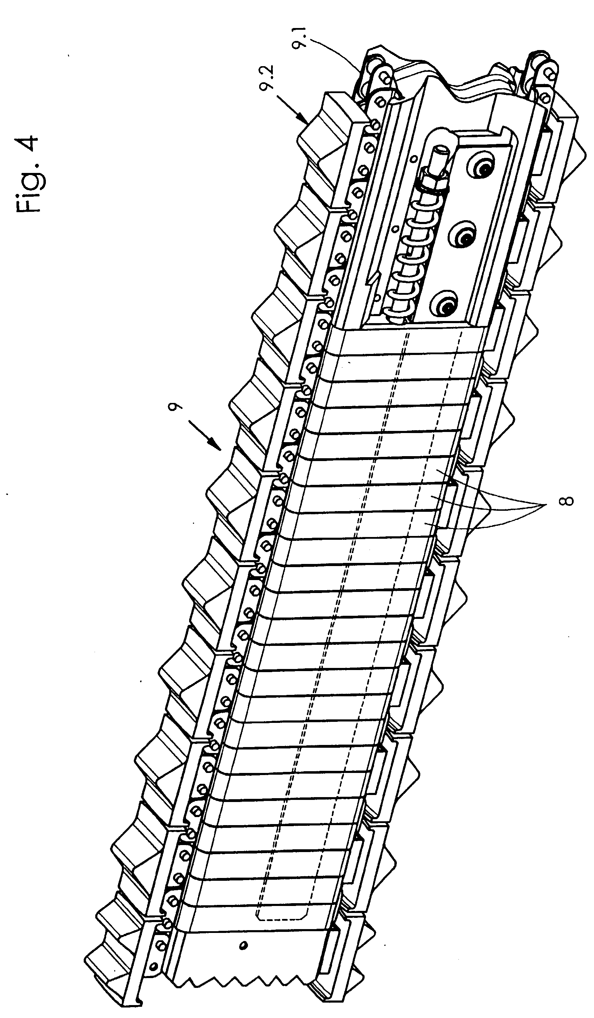

Figur 4 läßt den Aufbau einer Raupeneinheit gut erkennen. Wie man sieht, umfaßt die Raupeneinheit eine Führungseinrichtung. Diese ist zu einem großen Teil aus einer Vielzahl von Führungsgliedern 8 aufgebaut. Die Führungsglieder 8 sind von der Raupe 9 umschlungen. Diese umfaßt eine Kette 9.1 sowie einen Außengurt 9.2.

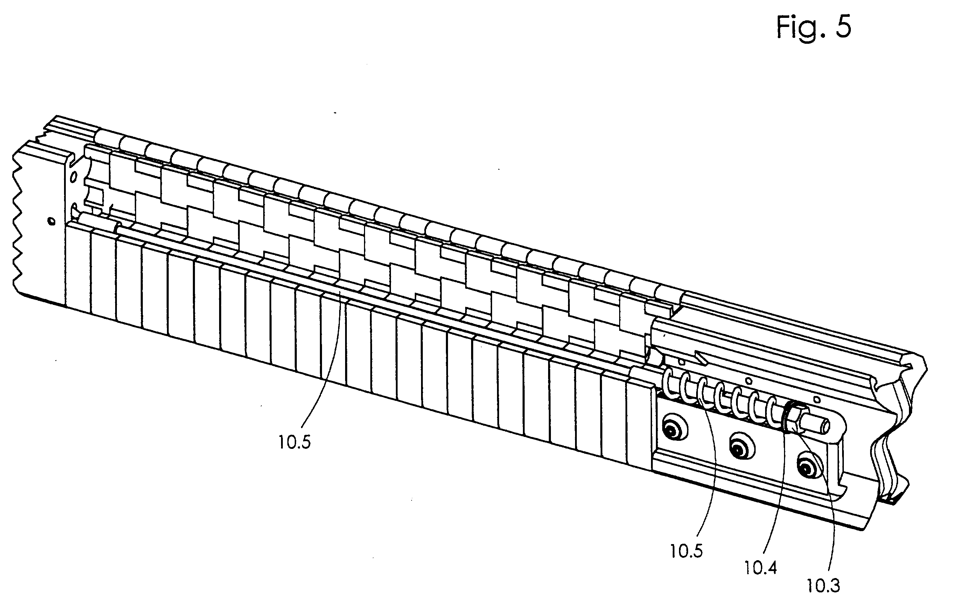

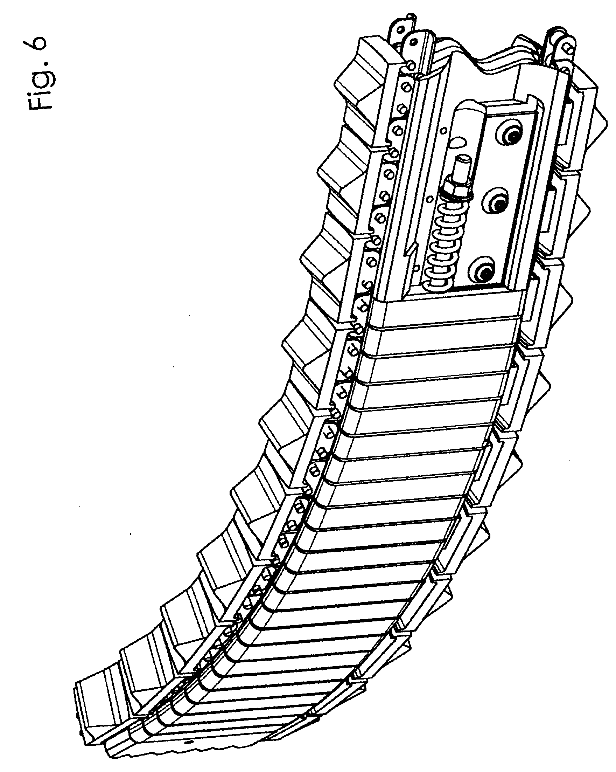

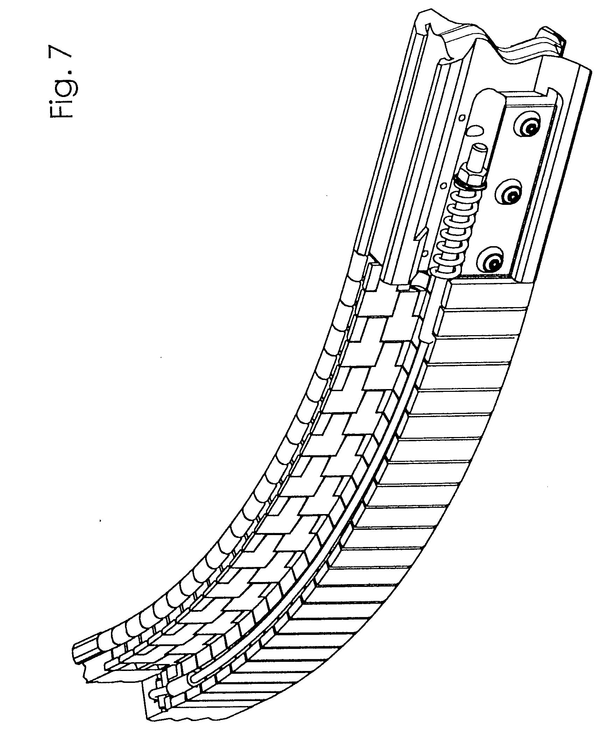

Wie man insbesondere aus Figur 5 erkennt, sind die Führungsglieder durch ein Seil 10 zusammengehalten. Das Seil ist durch miteinander fluchtende Bohrungen in den Führungsgliedern 8 hindurchgeführt. Es ist an seinem einen Ende mittels eines Stiftes 10.1 und einer Schlaufe 10.2 verankert. An seinem anderen Ende ist eine Mutter 10.3 aufgeschraubt. Die Mutter liegt an einer Unterlegscheibe 10.4 an. Die Unterlegscheibe 10.4 ruht auf einer Schraubenfeder 10.5. Auf diese Weise steht das Seil 10 unter Spannung. Aufgrund dieser Konstruktion läßt sich die ganze Führungseinrichtung mit den zahlreichen Führungsgliedern 8 derart krümmen, wie dies in den Figuren 6 und 7 dargestellt ist. Dabei wird die Schraubenfeder 10.5 zusammengedrückt. Sie übt dabei eine Kraft auf das Seil 10 aus. Das Seil 10 hat damit das Bestreben, die Führungseinrichtung wieder in ihre gerade Lage zu bringen.

Diese Konstruktion hat den folgenden Vorteil: die Führungseinrichtung kann durch eine äußere Kraft, beispielsweise durch eine Lenkeinrichtung, willkürlich in die gekrümmte Form gebracht werden, siehe die Figuren 6 und 7. Das Fahrwerk führt sodann eine Kurvenfahrt aus. Hört die äußere Einwirkung auf, so nimmt die Führungseinrichtung automatisch wieder die geradlinige Form gemäß der Figuren 4 und 5 ein. Die Lenkung wird somit automatisch zurückgenommen. Bei Kurvenfahrt liegen aneinander benachbarte Führungsglieder 8 an der Innenseite der Kurve nur entlang einer Linie aneinander an.

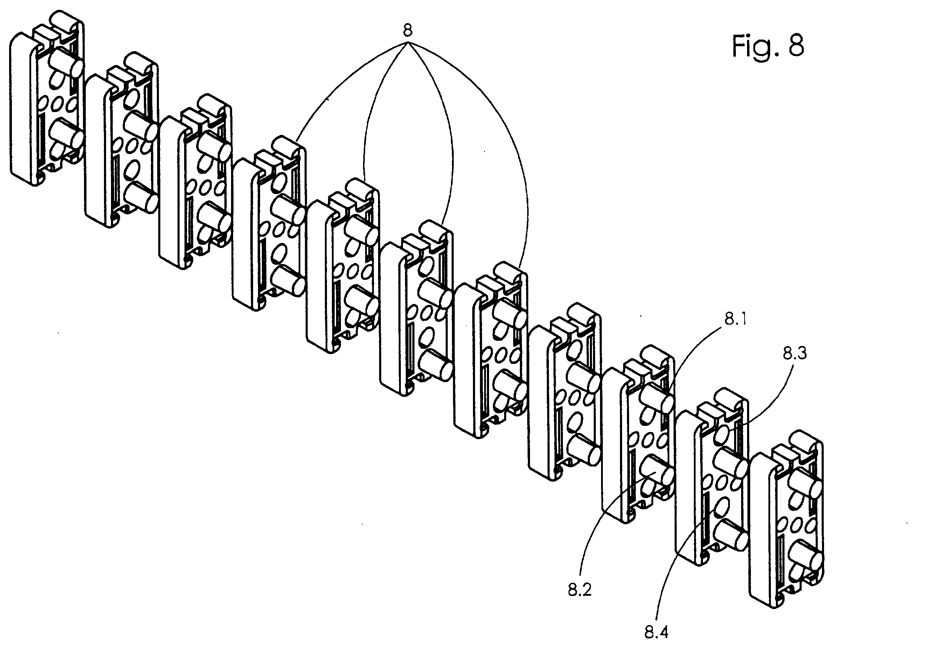

In Figur 8 erkennt man das Zusammenwirken der Führungsglieder 8.

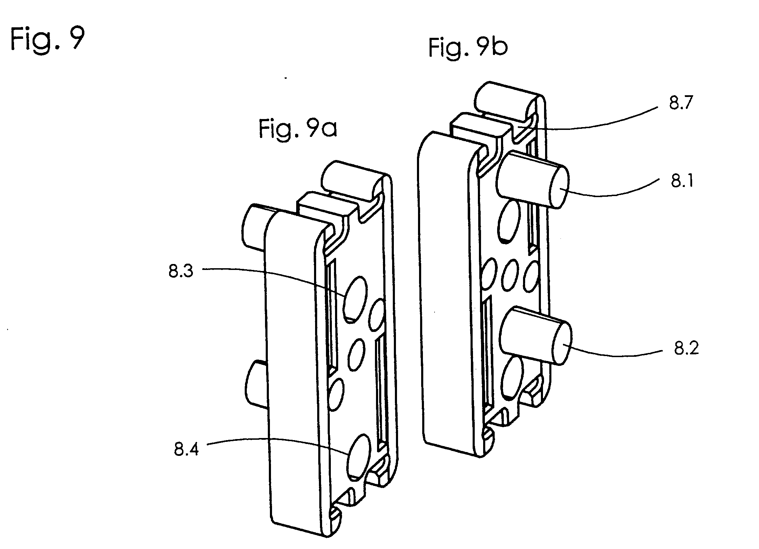

In Figur 9 erkennt man Einzelheiten dieser Führungsglieder. Die Figuren 9a und 9b zeigen ein und dasselbe Führungsglied 8, einmal mit Blick auf die Vorderseite (Figur 9a) und einmal mit Blick auf die Rückseite (Figur 9b). Jedes Führungsglied weist unter anderem zwei Zapfen 8.1, 8.2 auf, ferner zwei Aufnahmebohrungen 8.3, 8.4. Aus Figur 8 erkennt man folgendes: Betrachtet man beispielsweise dort von den drei rechts dargestellten Führungsgliedern 8 das zweite und das dritte Führungsglied, so erkennt man, daß der obere Zapfen 8.1 des dritten Führungsgliedes mit der Bohrung 8.3 des zweiten Führungsgliedes fluchtet, und daß der untere Zapfen 8.2 des dritten Führungsgliedes mit der unteren Bohrung 8.4 des zweiten Führungsgliedes fluchtet.

Dies bedeutet, daß die Zapfen, bzw. Bohrungen einander benachbarter Führungsglieder 8 gegeneinander höhenversetzt sind. Man kann dennoch alle Führungsglieder 8 völlig gleich gestalten, bei der Montage der Führungseinrichtung jedoch jeweils jedes zweite Führungsglied verdrehen, so daß sich die in Figur 8 gezeigte Konfiguration ergibt.

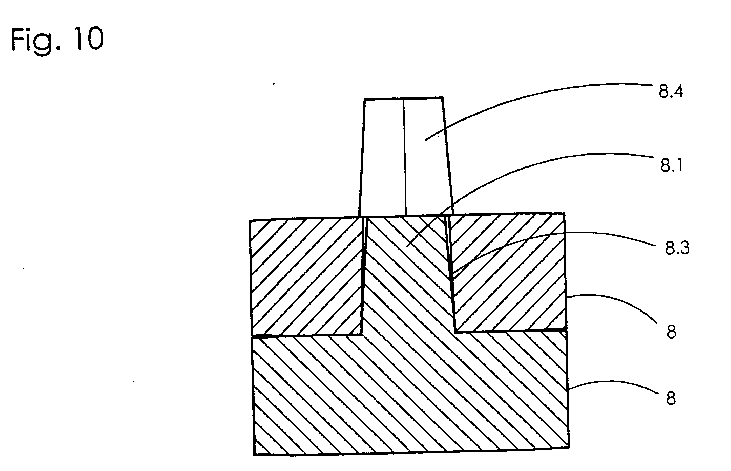

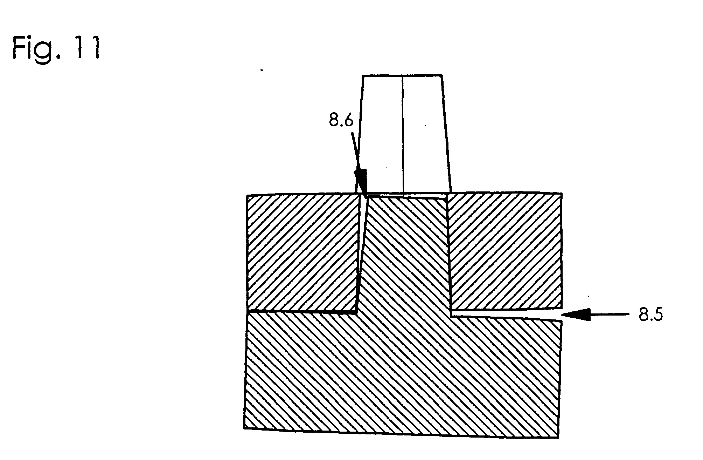

Figur 10 ist eine Draufsicht auf zwei zusammengesteckte Führungsglieder 8. Wie man sieht, greift ein oberer Zapfen 8.1 in eine obere Bohrung 8.3 ein. Man erkennt den unteren Zapfen 8.4, der freiliegt. Wie man sieht, hat der Zapfen in dieser Darstellung eine kegelstumpfförmige Gestalt. Die Gestalt ist jedoch im einzelnen derart gewählt, daß eine Auslenkung von einander benachbarten Führungsgliedern 8 relativ zueinander möglich ist - siehe Figur 11. Auch sind die einander zugewandten Flächen von einander benachbarten Führungsgliedern 8 entsprechend gestaltet, daß ein Auslenken möglich ist. Man beachte die beim Auslenken entstehenden keilförmigen Zwickel 8.5, 8.6 in Figur 11.

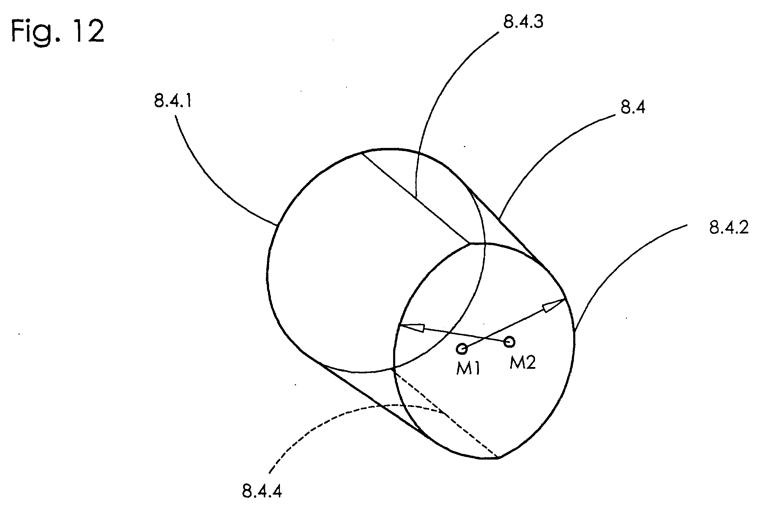

Es kann vorteilhaft sein, den einzelnen Zapfen 8.4 so zu gestalten, wie dies in Figur 12 dargestellt ist. Der Zapfen 8.4 weist an seiner Wurzel einen Querschnitt 8.4.1 auf, der aus einem Kreis gebildet ist. An seinem freien Ende hingegen weist er einen Querschnitt 8.4.2 auf, der aus zwei Kreisbogen gebildet ist, deren Mittelpunkte M1 und M2 auseinanderfallen. Somit entsteht an der Mantellinie ein Grad 8.4.3 und ein weiterer Grad 8.4.4.

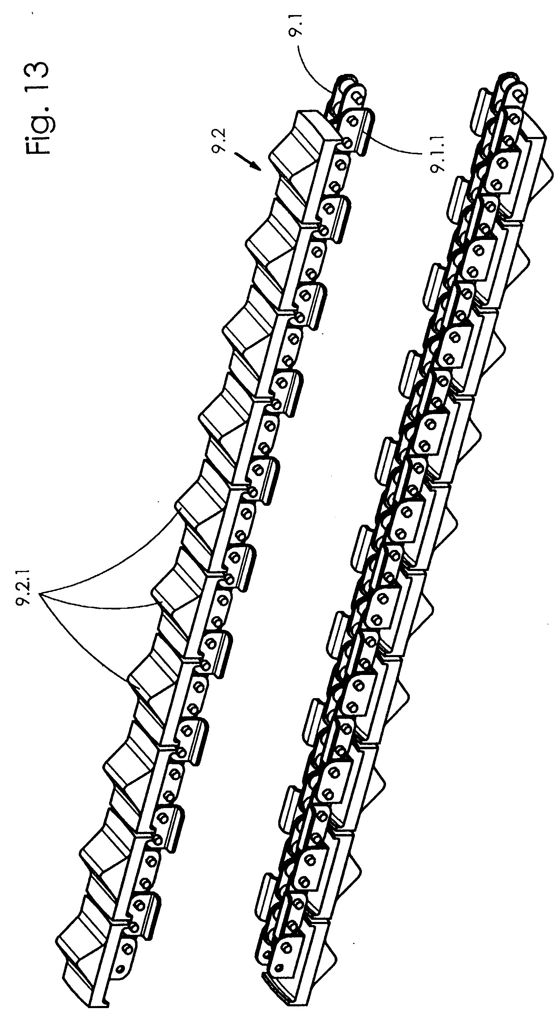

Der Aufbau der einzelnen Raupe ist aus Figur 13 genauer erkennbar. Man sieht wiederum die Kette 9.1 und den Außengurt 9.2. Die Kette hat den Aufbau einer gewöhnlichen Fahrradkette. Das einzelne Kettenglied weist eine Winkellasche 9.1.1 auf. Dieses greift in eine entsprechende Aussparung 8.7 in den Führungsgliedern 8 ein - siehe Figur 9b.

Der Außengurt ist aus einer Vielzahl von Gurtgliedern 9.2.1 aufgebaut. Diese bestehen im vorliegenden Falle aus Gummi.

Es ist auch denkbar, die gesamte Raupe 9 nur aus einer Kelle aufzubauen, deren Glieder außen gummiert sind.

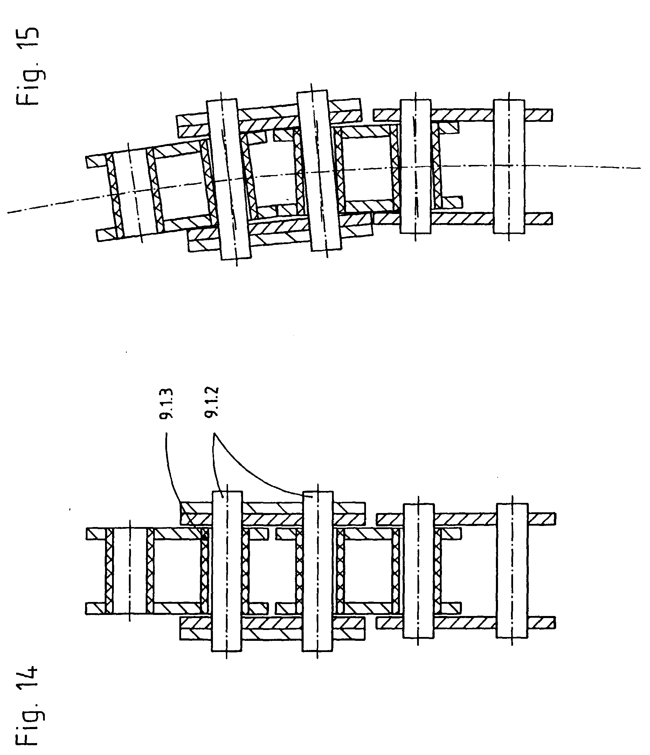

Die Figuren 14 und 15 lassen den Aufbau der Kette 9.1 genauer erkennen. Wie man sieht, weist die Kette Stifte 9.1.2 auf sowie diese umgebende Hülsen 9.1.3. Dabei haben die Hülsen gegenüber den Stifen Übermaß, sodaß die in Figur 15 gezeigte Krümmung der Kette möglich wird.

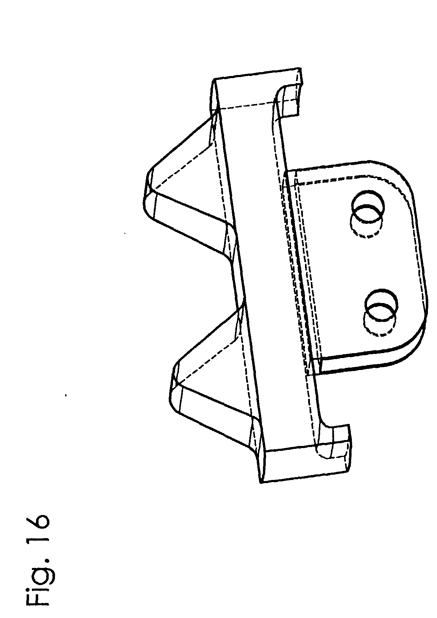

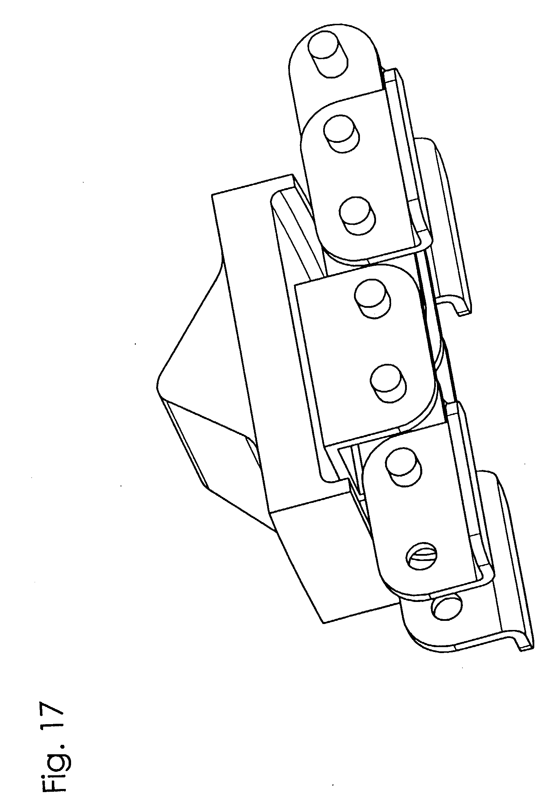

Das in Figur 16 gezeigte Außengurtglied ist mit zwei Höckern ausgestattet. Das in Figur 17 gezeigte Außengurtglied weist nur einen einzigen Höcker auf. Die Figuren 16 und 17 lassen noch eine interessante Einzelheit erkennen: Die Außengurtglieder weisen an ihren beiden Enden (in Laufrichtung gesehen) jeweils einen nach innen abgewinkelten Schenkel auf. Dieser bildet eine Auflagefläche. Die Schenkel stützen sich an den betreffenden Kettengliedern der Kette 9.1 ab. Hierdurch ergibt sich eine größere Laufstabilität.

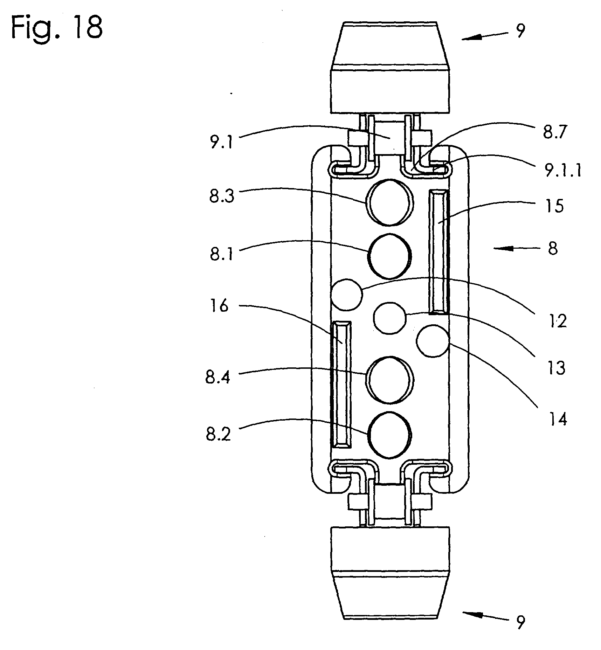

Bei dem Führungsglied 8 gemäß Figur 18 erkennt man wiederum die Winkellasche 9.1.1 der Kette 9.1, die in einer Aussparung 8.7 geführt ist.

Die Bohrungen 12, 13, 14 dienen der Aufnahme eines Seiles 10 (siehe Figur 5). Es können wahlweise eins bis drei solcher Seile verwendet werden.

Die Schlitze 15, 16 gehen durch das Führungsglied 8 hindurch. Sie dienen zum Hindurchstecken eines Flachstabes, beispielsweise eines Stahlstabes.

Dieser verhindert ein Krümmen der Führungseinrichtung im Sinne eines Abhebens von der Fahrtrasse, erlaubt jedoch ein Krümmen der Führungseinrichtung zum Zwecke der Kurvenfahrt.

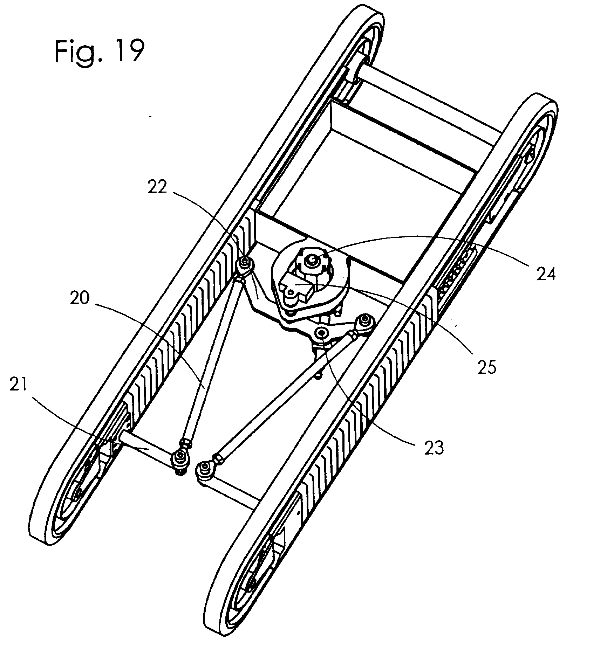

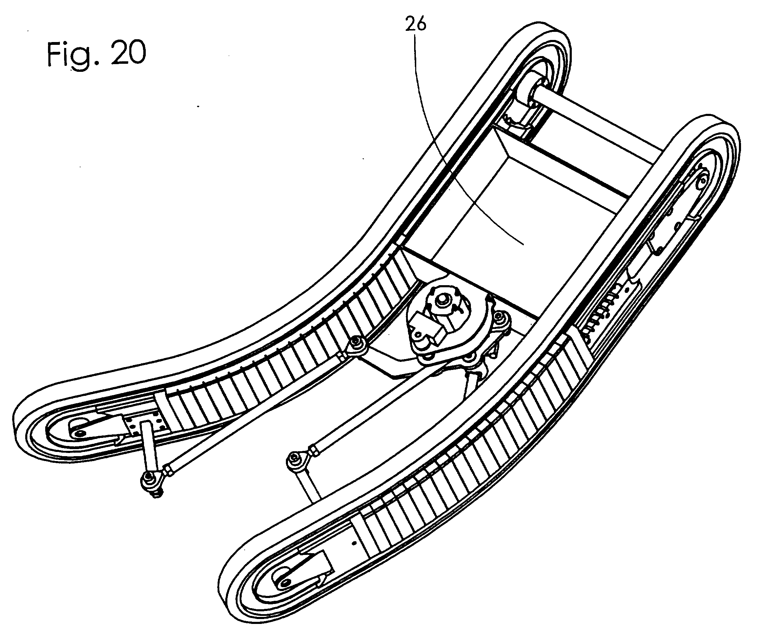

Die Figuren 19 und 20 lassen Einzelheiten des Lenkantriebs erkennen, unter anderem ein Lenkgestänge 20, Lenkhebel 21, eine Lenkgabel 22, einen Drehpunkt 23 für eine Spindelmutter, einen Getriebemotor 24 für die Lenkung sowie ein Potentiometer 25, das beispielsweise zur Verzögerung der Raupe 9 eingesetzt werden kann.

Eine Wanne 26 dient der Akkuaufnahme.

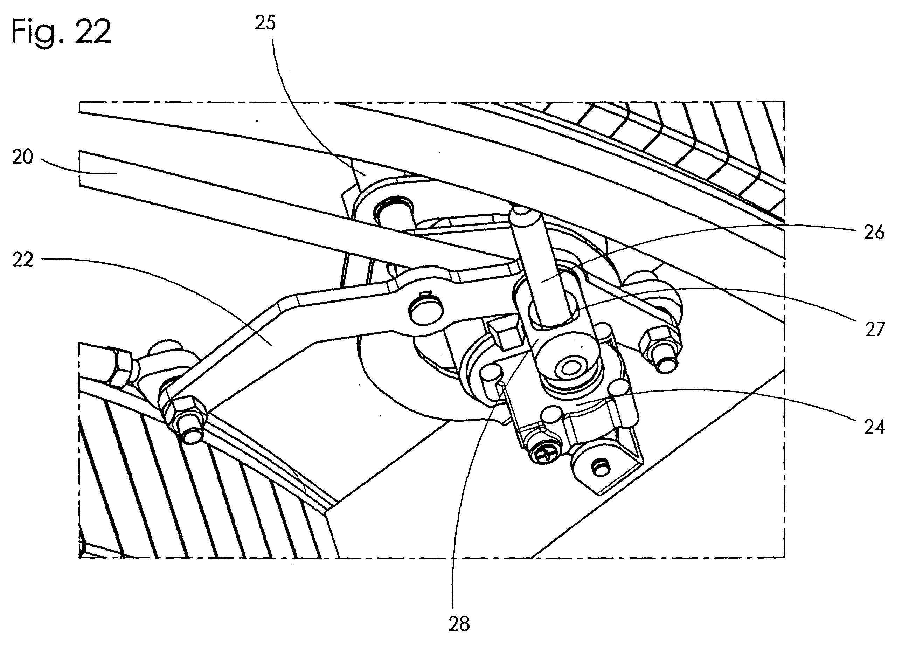

Aus Figur 22 erkennt man zusätzlich noch die genannte Spindel 26, die Spindelmutter 27 sowie die Aufnahme 28 für die Spindelmutter. Bei dieser Darstellung ist die Spindelmutter eingefahren. Das Fahrwerk führt eine Rechtskurve aus.

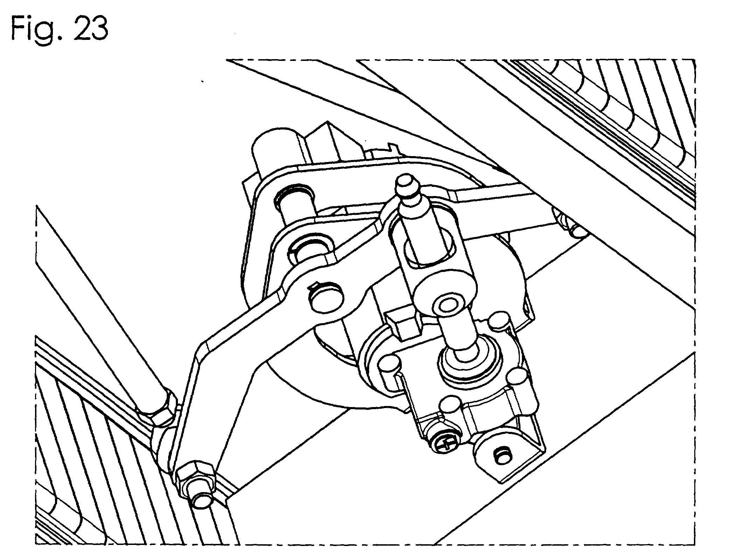

Bei der Darstellung gemäß Figur 23 steht die Spindelmutter mittig. Das Fahrwerk fährt geradeaus.

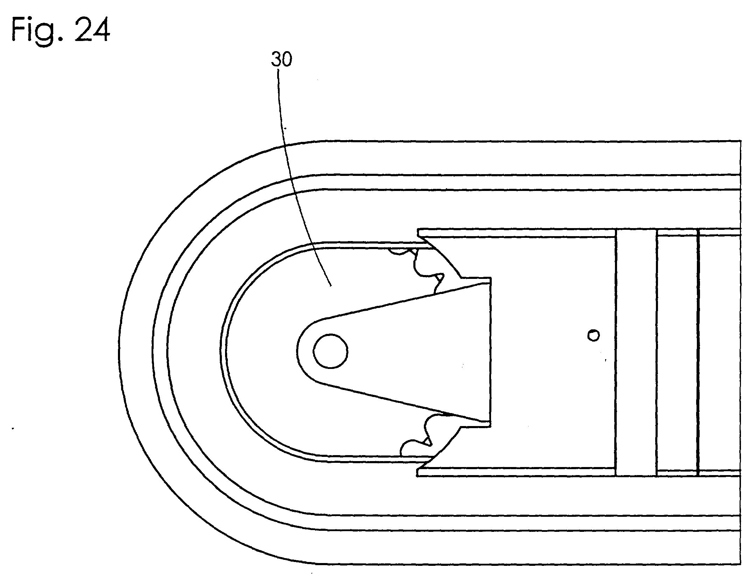

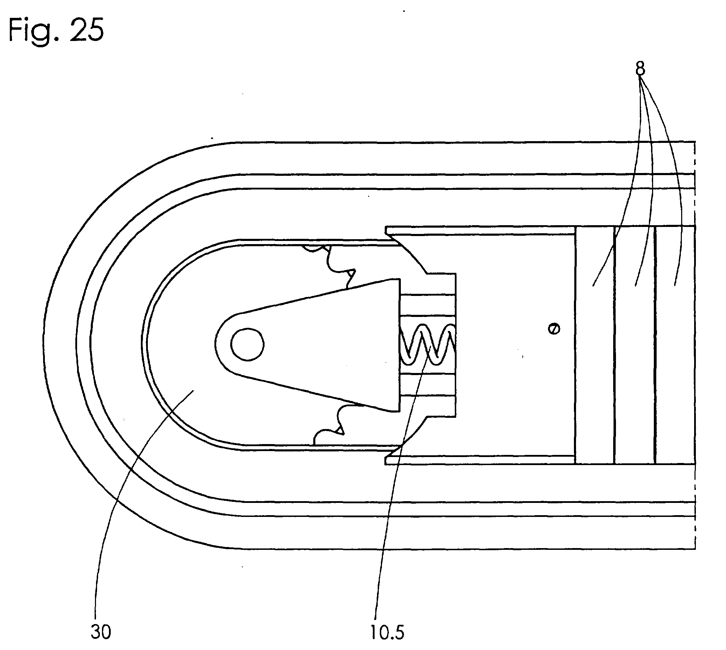

Aus den Figuren 24 und 25 erkennt man jeweils ein Kettenrad 30, das in die Keife 9.1 eingreift. Die Feder 10.5 ist bei Figur 25 nicht gespannt. Das Fahrwerk fährt geradeaus. Bei der Darstellung gemäß Figur 24 macht das Fahrwerk 1 eine Kurvenfahrt.

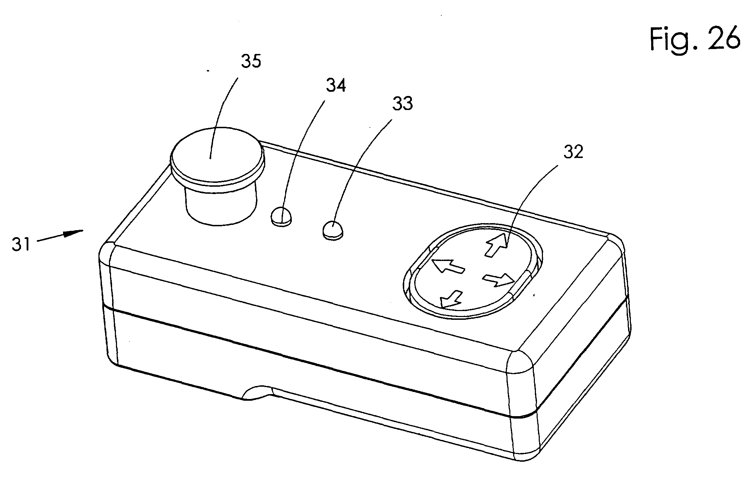

Der in Figur 26 dargestellte Steuerkasten 31 umfaßt einen Betätigungsknopf 32 für den Reversierbetrieb links/rechts. Die Bedienungsperson kann gleichzeitig vorwärts oder rückwärts fahren mit Lenkeinschlag.

Eine LED 33 zeigt den Zustand des Akkus an. Eine Grünanzeige bedeutet beispielsweise, daß der Akku noch hinreichend geladen ist. Eine weitere LED 34 leuchtet dann rot auf, wenn der Notschalter 35 betätigt wurde.

Es ist auch denkbar, das gesamte Fahrwerk voll zu automatisieren. So ließe sich beispielsweise der genannte Winkel - siehe Figur 3 - automatisch der Steigung bzw. des Gefälles der Fahrtrasse anpassen. Durch entsprechende Sensoren kann das Maß des Lenkeinschlages ermittelt und die Lenkeinrichtung entsprechend betätigt werden.

Mit der erfindungsgemäßen Vorrichtung, insbesondere mit der Aufgliederung der Führungseinrichtung in Führungsglieder 8, lassen sich Kurven von sehr kleinem Krümmungsradius bewältigen. So ist es beispielsweise möglich, relativ enge Wendeltreppen zu überwinden, und zwar bei Aufwärts- und bei Abwärtsfahrt.

## Patentansprüche

1. Fahrwerk für eine Last, beispielsweise Treppensteigeinrichtung für einen Rollstuhl (2), gekennzeichnet durch die folgenden Merkmale:
1.1 es sind zwei Raupeneinheiten (3.1, 4.1; 3.2, 4.2) vorgesehen;
1.2 jede Raupeneinheit (3.1, 4.1; 3.2, 4.2) umfaßt eine Raupe (9), die zu einer endlosen Schlaufe gebildet ist;
1.3 jede Schlaufe umschlingt eine die betreffende Raupe führende, langgestreckte Führungseinrichtung;
1.4 jede Führungseinrichtung ist jeweils der Länge nach wenigstens in zwei Teile unterteilt, die relativ zueinander um eine auf der Fahrspur senkrechte Schwenkachse verschwenkbar sind.

2. Fahrwerk nach Anspruch 1, dadurch gekennzeichnet, daß die Führungseinrichtung Gleitbahnen zum Führen der Raupe (9) umfaßt.

3. Fahrwerk nach Anspruch 2, dadurch gekennzeichnet, daß die Raupe eine Kette (9.1) umfaßt.

4. Fahrwerk nach Anspruch 3, dadurch gekennzeichnet, daß die Kette (9.1) auf ihrer Außenseite Stollen (9.2) trägt.

5. Fahrwerk nach einem der Ansprüche 1 - 4, dadurch gekennzeichnet, daß die Führungseinrichtung wenigstens im Bereich der Schwenkachse aus Gliedern (8) aufgebaut ist, die ein Verschwenken im Sinne einer Kurvenfahrt erlauben.

6. Fahrwerk nach Anspruch 5, dadurch gekennzeichnet, daß die Glieder mittels Vorsprüngen (8.1, 8.2) und Aussparungen (8.3, 8.4) formschlüssig ineinandergreifen.

7. Fahrwerk nach einem der Ansprüche 1 - 6, dadurch gekennzeichnet, daß eine Vorrichtung zum automatischen Rückstellen des Lenkausschlages nach Unterbrechen des Lenkeingriffes vorgesehen ist.

8. Vorrichtung nach Anspruch 6 oder 7, dadurch gekennzeichnet, daß die Führungsglieder (8) mittels eines Seiles (10) unter Zwischenfügung einer Feder (10.5) zusammengespannt sind.
